# EUROPÄISCHE PATENTSCHRIFT

(11) **EP 0 592 832 B1**
(45) Veröffentlichungstag und Bekanntmachung des Hinweises auf die Patenterteilung: **17.04.1996**
(21) Anmeldenummer: 93114888.6
(22) Anmeldetag: 16.09.1993
(51) Int. Cl.: B01D 46/12

(54) **Anlage zum Ausfiltern von Verunreinigungen aus einem Gasstrom**
Plant for filtering of pollutants out of a gas stream
Installation de filtrage de polluants d'un courant de gaz

(30) Priorität: 15.10.1992 DE 4234807
(43) Veröffentlichungstag der Anmeldung: 20.04.1994
(73) Patentinhaber: H KRANTZ-TKT GmbH, D-51465 Bergisch Gladbach (DE)
(72) Erfinder: Gores, Stefan, Dipl.-Ing., D-52070 Aachen (DE)
(74) Vertreter: Bauer, Hubert, Dipl.-Ing.

(56) Entgegenhaltungen:
- EP-A- 0 114 317
- DE-A- 3 830 991
- DE-U- 7 304 079
- GB-A- 1 148 002

## Beschreibung

Die Erfindung betrifft eine Anlage zum Ausfiltern von Verunreinigungen aus einem Gasstrom mittels einer gasdurchlässigen Filtereinrichtung aus einer Mehrzahl von horizontal durchströmten Filterelementen. Diese sind einzeln oder gruppenweise einer pneumatischen Reinigungseinrichtung aussetzbar, welche über den gesamten Wirkungsbereich der Filtereinrichtung verfahrbar ist.

Eine derartige aus der DE-A-38 30 991 bekannte Anlage ist mit einer Reinigungseinrichtung ausgestattet, die mindestens ein bewegbares Saugrohr aufweist. Dieses dient dem Reinigen mindestens eines filterwirksamen Abschnittes der Filtereinrichtung durch Absaugen von auf ihr angesammelten Verunreinigungen. Dazu ist das Saugrohr entlang einem geradlinigen Bewegungsweg bewegbar und so ausgebildet und angeordnet, daß es sich dabei in quer zu seiner Bewegungsrichtung verlaufender Richtung entlang diesem Abschnitt erstreckt und dieser folglich auf einem Bewegungsweg des Saugrohres abreinigbar ist.

Die Reinigung der Filtereinrichtung durch Absaugen der ausgefilterten und abgelagerten Verunreinigungen hat zwei wesentliche Nachteile:
Zum einen läßt sich mit einer Absaugdüse eines Saugrohres keine Tiefenwirkung erzielen, so daß die Absaugdüse das Filtermedium direkt berühren muß, um eine effektive Reinigungswirkung überhaupt zu erreichen. Diese Berührung kann leicht zu Beschädigungen des Filtermediums führen, zumal ein relativ hoher Unterdruck im Saugrohr erforderlich ist. Zudem muß die gesamte Filterfläche mit dem Öffnungsquerschnitt der Absaugdüse überfahren werden, da sich der Erfassungsbereich der Absaugdüse nur auf die jeweilige Berührungsfläche zwischen der Absaugdüse und dem Filtermedium beschränkt.

Zum anderen muß die Reinigungseinrichtung auf der Rohgasseite der Filtereinrichtung positioniert werden und ist dadurch einer erhöhten Verschmutzung ausgesetzt. Folglich wird zusätzlich zu einem vermehrten Wartungsaufwand dennoch der Verschleiß der Reinigungseinrichtung begünstigt.

Zum Ausfiltern von Verunreinigungen aus einem Gasstrom sind auch bereits Anlagen allgemein bekannt, die mit einer Reinigungseinrichtung ausgerüstet sind, welche nach dem Prinzip der Druckluftgegenstromspülung arbeitet. Dabei müssen jedoch die jeweils dieser pneumatischen Reinigung ausgesetzten Filterelemente von der Beaufschlagung mit dem Rohgasstrom freigehalten werden und können erst dann wieder ihre Funktion übernehmen, nachdem auf der Reingasseite die aus Rückspüldüsen austretenden Druckluftstrahlen die auf der Rohgasseite auf das Filtermedium haftenden Verunreinigungen abgelöst haben und diese in einer Sammeleinrichtung sedimentiert sind.

Insbesondere die Sedimentation der Verunreinigungen erfordert stoffspezifische, in der Regel lange Pausenzeiten, bevor die so regenerierten Filterelemente einem erneuten Filtrationszyklus ausgesetzt werden können.

Ein weiterer Nachteil derartiger Filteranlagen ergibt sich aus dem Mehraufwand für die dabei erforderliche Modulbauweise, bei der jedem Filtermodul mindestens eine Absperrklappe zugeordnet werden muß und wobei ein großer Steuerungsaufwand für die einzelnen Abreinigungsabläufe und deren Koordination entsteht.

Zudem sind Filteranlagen, deren Reinigungseinrichtung nach dem Prinzip der Druckluftgegenströmung arbeiten, in der Regel so konzipiert, daß der Gasstrom die im wesentlichen horizontal ausgerichteten Filterelemente vertikal von unten nach oben durchströmt. Obwohl das Volumen bekannter Filterelemente in Kassettenform den Bau kompakter Anlagen ermöglicht, benötigen insbesondere abreinigbare Schwebstoffilteranlagen wegen der vertikalen Durchströmung eine relativ große Grundfläche bei vergleichsweise geringer Bauhöhe. In der Regel steht aber als Platzangebot für Filteranlagen in modernen Industriebetrieben Raum mit relativ geringer Grundfläche bei relativ großer Höhe zur Verfügung.

Der Erfindung liegt die Aufgabe zugrunde, eine Anlage der eingangs beschriebenen Art so auszubilden, daß sie nicht nur große Filterflächen bei einem minimalen Grundflächenbedarf ermöglicht, sondern zudem mit einem geringen Einrichtungsaufwand eine intensive Abreinigung der Filterflächen gewährleistet, und die Funktionsfähigkeit der Anlage durch den Abreinigungsvorgang praktisch gänzlich unbeeinträchtigt läßt.

Zur Lösung dieser Aufgabe wird von einer Anlage der im Oberbegriff des Anspruchs 1 genannten Art ausgegangen, welche erfindungsgemäß die in seinem kennzeichnenden Teil angegebenen Merkmale aufweist.

Durch das auf der Reingasseite der Filtereinrichtung verfahrbare Abdeckgehäuse wird lediglich eine geringe Teilfläche der im übrigen wirksam bleibenden Gesamtfilterfläche der Gasdurchströmung entzogen. Besondere Umlenkkanäle sowie Absperrklappen und Steuerungseinrichtungen dafür entfallen. Durch die innerhalb des Gehäuses über die Filterfläche verfahrbare, mit Druckluft beaufschlagbare Düse kann ein mechanischer Kontakt zwischen dieser und der Filterfläche vermieden werden, wobei der Erfassungsbereich des Druckluftstrahls nach der Theorie der sogenannten Prallströmung deutlich größer ist als der Düsenaustrittsquerschnitt. Durch die auf der Rohgasseite an die Filterelemente angeordneten vertikal ausgerichteten Trennwände entstehen hinreichend abgeschirmte Sedimentationsräume, durch welche die abgelösten Verunreinigungen vertikal nach unten sinken können und sich unterhalb der Filtereinrichtung zentral sammeln lassen.

Nach einer Austgestaltung der Erfindung läßt sich die zur ungestörten Sedimentation erforderliche Abschirmung der Sedimentationskammern dadurch optimieren, daß die jeweils aus Filterelementen und zwei Trennwänden gebildeten Kammern durch die Trennwände verbindende, in einem Abstand zur Ebene der Filterelemente angeordnete Vorabscheiderelemente vervollständigt ist.

Vorzugsweise münden die Sedimentationskammern bodenseitig in eine gemeinsame Sammelrinne, worin eine über ihre Länge reichende Förderschnecke drehbar gelagert ist, wobei die Sammelrinne mit einer in einen Sammelbehälter mündenden Auslaßöffnung versehen ist.

Insgesamt erlaubt die erfindungsgemäße Anlage den rationellen Aufbau hoher Filtereinrichtungen für große Volumenströme, wobei für die Abreinigung der Filterelemente nur eine Reinigungseinrichtung benötigt wird, Absperrklappen und Steuerungseinrichtungen dafür gänzlich entfallen und sich der noch erforderliche Steuerungsaufwand auf eine einfache Ablaufsteuerung für das Abdeckgehäuse und für die mit Druckluft beaufschlagte Düse beschränkt. Der Signalverarbeitungsaufwand für den ordnungsgemäßen Betrieb der erfindungsgemäßen Anlage ist daher sehr gering.

In der Zeichnung ist ein Ausführungsbeispiel einer erfindungsgemäßen Anlage schematisch dargestellt. Es zeigt:

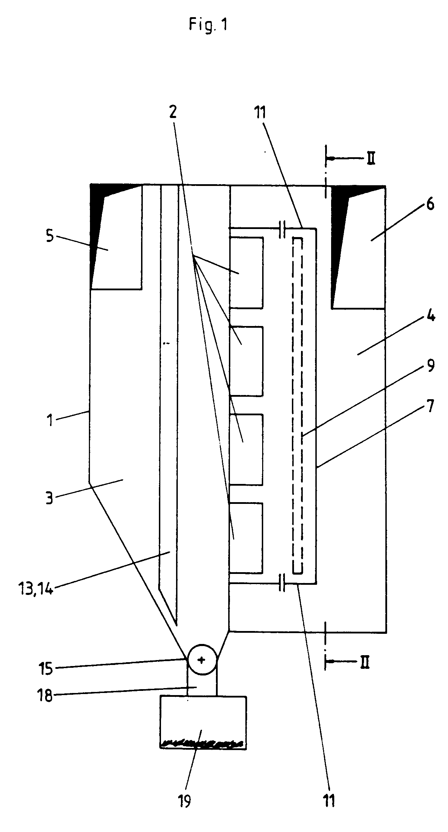

Fig. 1 die Anlage in einem Vertikalschnitt,

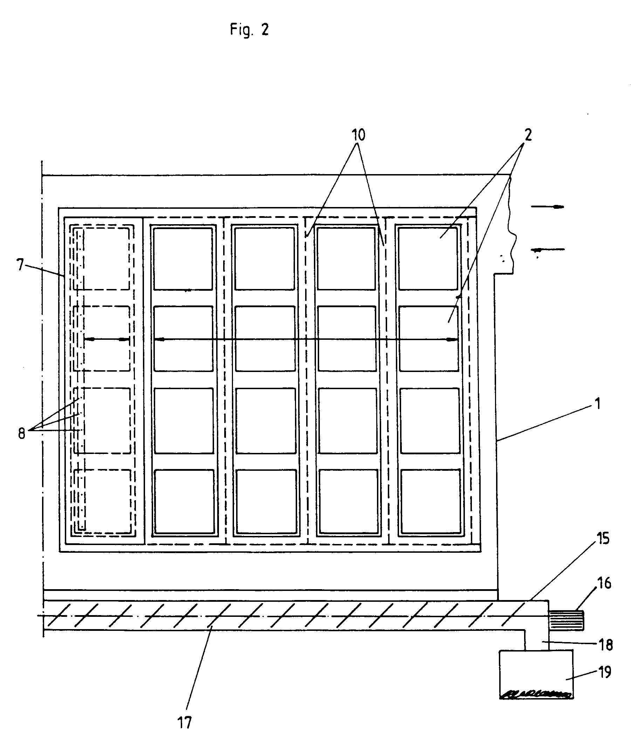

Fig. 2 die Anlage in einem Schnitt nach der Linie II-II der Fig. 1,

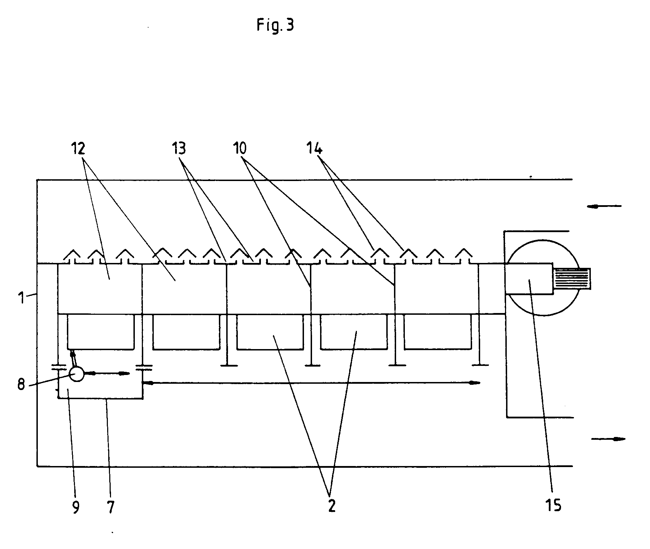

Fig. 3 die Anlage in einem Horizontalschnitt.

Ein die Anlage umschließendes Gehäuse 1 ist durch eine vertikale Wand aus vier mal fünf Filterelementen 2 in eine Rohgasseite 3 und eine Reingasseite 4 unterteilt. An die Rohgasseite 3 ist ein Zuführkanal 5 für den zu filternden Rohgasstrom und an die Reingasseite 4 ein Abführkanal 6 für den gefilterten Reingasstrom angeschlossen.

Jeweils vier übereinander angeordnete Filterelemente 2 sind auf der Reingasseite 4 durch ein in horizontaler Richtung verfahrbares Abdeckgehäuse 7 abgedeckt. Innerhalb des Abdeckgehäuses 7 ist ein mit gegen die Filterelemente 2 gerichteten Düsen 8 bestücktes und an eine nicht dargestellte Druckluftquelle angeschlossenes Rohr, das sich über die Höhe der vier Filterelemente 2 erstreckt, gleichfalls horizontal verfahrbar.

Zwischen den jeweils fünf nebeneinander angeordneten Filterelementen 2 sind vertikal ausgerichtete Trennwände 10 angeordnet, an deren Längskanten auf der Reingasseite 4 die Längskanten von Seitenwänden 10 des Abdeckgehäuses 7 anpreßbar sind. Die Trennwände 10 erstrecken sich bis in den Bereich der Rohgasseite 3 und begrenzen dort mit den Filterelementen 2 Sedimentationskammern 12.

In einem Abstand zur Ebene der Filterelemente 2 sind auf der Rohgasseite 3 sich überlagernde, im Querschnitt U- und V-förmige Vorabscheiderelemente 13 und 14 angeordnet, welche die Sedimentationskammern 12 vervollständigen.

Die Sedimentationskammern 12 münden bodenseitig in eine gemeinsame Sammelrinne 15, in welche eine mit einem Motor 16 angetriebene Förderschnecke 17 rotiert. Diese führt die in der Rinne 15 sedimentierten Verunreinigungen über eine Auslaßöffnung 18 in einen Sammelbehälter 19.

## Patentansprüche

1. Anlage zum Ausfiltern von Verunreinigungen aus einem Gasstrom mittels einer gasdurchlässigen Filtereinrichtung aus einer Mehrzahl von horizontal durchströmten Filterelementen (2), die einzeln oder gruppenweise einer pneumatischen Reinigungseinrichtung aussetzbar sind, welche über den gesamten Wirkungsbereich der Filtereinrichtung verfahrbar ist, dadurch gekennzeichnet, daß
- die pneumatische Reinigungseinrichtung aus einem auf der Reingasseite (4) der Filtereinrichtung verfahrbaren Abdeckgehäuse (7) besteht, wobei eine Gehäuseseite durch mindestens ein Filterelement (2) gebildet ist,
- innerhalb des Abdeckgehäuses (7) mindestens eine mit Druckluft beaufschlagbare Düse (8) über die Fläche der durch mindestens ein Filterelement (2) gebildeten Gehäuseseite verfahrbar angeordnet ist,
- im Abstand der Breite des verfahrbaren Abdeckgehäuses (7) auf der Rohgasseite (3) an die Filterelemente (2) vertikal ausgerichtete Trennwände (10) angeordnet sind, die Sedimentationskammern (12) begrenzen.

2. Anlage nach Anspruch 1, dadurch gekennzeichnet, daß die jeweils aus mindestens einem Filterelement (2) und zwei Trennwänden (10) gebildeten Sedimentationskammern (12) durch die Trennwände (10) verbindende, in einem Abstand zur Ebene der Filterelemente (2) angeordnete Vorabscheiderelemente (13, 14) vervollständigt sind.

3. Anlage nach Anspruch 1 oder 2, dadurch gekennzeichnet, daß die Sedimentationskammern (12) bodenseitig in eine gemeinsame Sammelrinne (15) münden, worin eine über ihre Länge reichende Förderschnecke (17) drehbar gelagert ist.

4. Anlage nach Anspruch 3, dadurch gekennzeichnet, daß die Sammelrinne (15) mit einer in einen Sammelbehälter (19) mündenden Auslaßöffnung (18) versehen ist.

## Claims

1. An installation for filtering pollutants out of a gas stream by means of a gas-permeable filter device comprising a plurality of filter elements (2) through which flow occurs horizontally and which can be exposed, individually or in groups, to a pneumatic cleaning device which can be moved over the entire effective region of the filter device, characterised in that
- the pneumatic cleaning device consists of a covering housing (7) which can be moved on the clean gas side (4) of the filter device, wherein one housing side is formed by at least one filter element (2),
- at least one nozzle (8) which can be acted upon by compressed air is disposed inside the covering housing (7) so that it can be moved over the surface of the housing side formed by at least one filter element (2),
- partition walls (10), which delimit sedimentation chambers (12), are disposed at a spacing of the width of the movable covering housing (7) on the crude gas side (3) vertically aligned towards the filter elements (2).

2. An installation according to claim 1, characterised in that the sedimentation chambers (12), which are each formed from at least one filter element (2) and two partition walls (10), are completed by preliminary separator elements (13, 14) which connect the partition walls (10) and are disposed at a distance from the plane of the filter elements (2).

3. An installation according to claim 1 or 2, characterised in that the sedimentation chambers (12) lead at their bases into a common collecting channel (15) in which a conveyor spiral (17) which extends over the length thereof is rotatably mounted.

4. An installation according to claim 3, characterised in that the collecting channel (15) is provided with an outlet opening (18) leading into a collecting vessel (19).

## Revendications

1. Installation de filtrage des impuretés présentes dans un courant de gaz au moyen d'un agencement de filtration perméable aux gaz et constitué par plusieurs éléments filtrants (2) disposés pour être traversés de manière horizontale par le courant de gaz et pour être soumis, de manière individuelle ou groupée, à l'action d'un dispositif de nettoyage pneumatique, lequel peut être déplacé dans toute la zone d'action de cet agencement de filtration, cette installation étant caractérisée par le fait que
- le dispositif de nettoyage pneumatique est constitué par un carter de recouvrement (7) déplaçable sur le côté (4) de l'agencement de filtration correspondant au gaz épuré, un côté de ce carter étant constitué par au moins un élément filtrant (2),
- au moins une buse (8) pouvant être alimentée en air comprimé est située à l'intérieur du carter de recouvrement (7) et peut être déplacée sur la surface du côté du carter constitué par au moins un élément filtrant (2),
- des parois de séparation (10) disposées verticalement sur les éléments filtrants (2) sont situées sur le côté (3) correspondant au gaz brut, à une distance égale à la largeur du carter de recouvrement (7) déplaçable, lesquelles parois délimitent des chambres de sédimentation (12).

2. Installation selon la revendication 1, caractérisée par le fait que les chambres de sédimentation (12) constituées, respectivement, par au moins un élément filtrant (2) et deux parois de séparation (10), sont complétées par des éléments de séparation avant (13, 14) reliant les parois (10) et situés à distance du plan des éléments filtrants (2).

3. Installation selon l'une quelconque des revendications 1 et 2, caractérisée par le fait que les chambres de sédimentation (12) débouchent, du côté du fond, dans une goulotte d'accumulation (15) commune, dans laquelle une vis sans fin (17) s'étendant sur toute sa longueur est montée de manière rotative.

4. Installation selon la revendication 3, caractérisée par le fait que la goulotte d'accumulation (15) est pourvue d'une ouverture d'évacuation (18) débouchant dans un réservoir collecteur (19).
